# FASCICULE DE BREVET EUROPEEN

(11) **EP 1 013 388 B1**
(45) Date de publication et mention de la délivrance du brevet: **10.07.2002**
(21) Numéro de dépôt: 99490041.3
(22) Date de dépôt: 03.12.1999
(51) Int. Cl.: B29C 41/18, B29C 33/36, B29C 41/36, B29C 41/04

(54) **Installation de moulage de poudres**
Pulver-Formanlage
Powder moulding installation

(30) Priorité: 21.12.1998 FR 9816384
(43) Date de publication de la demande: 28.06.2000
(73) Titulaire: S.M.C.A., SARL, 62920 Chocques (FR)
(72) Inventeur: Risbourg, Arnaud, 62400 Bethune (FR); Desbonnets, François, 59500 Douai (FR)
(74) Mandataire: Ecrepont, Robert Pierre

(56) Documents cités:
- EP-A- 0 128 710
- EP-A- 0 208 432
- FR-A- 2 595 975
- GB-A- 1 174 559

## Description

L'invention se rapporte à une installation de moulage.

Pour mouler des pièces plastiques, il existe de nombreux procédés dont le choix dépend notamment du produit à obtenir.

Pour le moulage de pièces minces ou de peaux destinées à recouvrir notamment les tableaux de bord des véhicules, on utilise un procédé dit «slush moulding».

Ce procédé de moulage, vu de manière simpliste, consiste à déposer sur une coquille chaude de la poudre plastique qui, au contact de la surface chaude de la coquille, va fondre et recouvrir celle-ci.

L'ensemble est ensuite refroidi avant le démoulage pour retirer, par exemple, la peau qui sera fixée ultérieurement sur une coque plastique rigide, telle un tableau de bord d'un véhicule automobile.

Ce procédé comprend donc au moins quatre étapes successives :
- une étape de mise en température de la coquille,
- une étape de dépose de la matière sur la surface chaude de la coquille,
- une étape de refroidissement et
- une étape de démoulage.

Lors de la première étape, on introduit la coquille dans un four et on amène cette coquille à la température requise.

Ensuite, cette coquille chauffée est amenée à un poste de dépose de la poudre.

Pour cela, la coquille est accouplée à un bac contenant de la matière en poudre et, lorsque la coquille et le bac sont accouplés, on fait tourner l'ensemble autour d'un axe pour obtenir une répartition de la matière.

La rotation peut se faire sur 360° ou à la manière d'un pendule.

La coquille est ensuite désaccouplée du bac pour un refroidissement de la pièce plastique obtenue et démoulage ensuite.

Pour la mise en oeuvre de ce procédé, il est connu de faire appel à une installation comportant un carrousel présentant autant de bras que d'étapes du procédé, chaque bras présentant à son extrémité une coquille et, répartis autour de ce carrousel, les moyens complémentaires tels le four etc ....

L'utilisation d'un carrousel permet de travailler en temps masqué et donc d'améliorer le rendement.

Les temps d'immobilisation à chaque poste étant différents et/ou notamment l'opération de chauffage étant plus lente que les autres, pour optimiser l'utilisation du four, on a déjà pensé à le partager entre deux installations de rotomoulage (FR-A-2.595.975) comprenant donc deux carrousels dont les trajectoires se rejoignent au poste de mise en température.

Le four est ainsi partagé entre deux outils de production mais il n'y a pas interaction entre les outils portés par un carrousel et les outils portés par l'autre carrousel.

On connaît, également, une installation (EP-A-208.432) comprenant un carrousel, dit principal, comportant un nombre prédéterminé de coquilles et au niveau du poste de prise de la matière, est prévu un second carrousel portant une pluralité de bacs, chacun contenant une matière de couleur différente de celle des autres bacs.

Lorsqu'une coquille se présente au poste de prise de matière, en fonction de la couleur désirée, on amène le bac de la couleur correspondante que l'on accouple à la coquille et ce, à l'aide d'un chariot qui se déplace selon une direction radiale au carrousel.

Dans un tel procédé, la qualité des pièces réalisées dépend des nombreux paramètres que l'installation précitée ne peut maîtriser sans perfectionnements substantiels.

A cet effet, l'invention a pour objet une installation de moulage de pièces minces comprenant :
- un carrousel dit carrousel principal d'axe de rotation vertical comprenant lui-même un nombre prédéterminé de bras radiaux mobiles en rotation autour de leur axe longitudinal et portant à l'extrémité libre une coquille de moulage,
- un carrousel dit carrousel secondaire d'axe de rotation vertical comprenant au moins deux bacs à poudre disposés radialement, les coquilles se déplacant en rotation dans un plan situé à un niveau supérieur au plan dans lequel se déplacent les bacs à poudre,
- à un poste dit de prise de poudre, un moyen pour, d'une part, transférer le bac à poudre depuis le carrousel secondaire vers une coquille de moulage et, d'autre part, l'accoupler à celle-ci et vice versa,
- des moyens pour entraîner en rotation la coquille alors accouplée au bac à poudre,
cette installation étant caractérisée en ce que :
- au poste de prise de poudre, les trajectoires des coquilles et des bacs se superposent, le bac à poudre se situant alors sous la coquille et
- au poste de prise de poudre, l'installation comprend :
   . d'une part, à l'aplomb de l'ensemble coquille et bac immobilisé l'un au dessus de l'autre, des moyens pour saisir le bac à poudre et le transférer vers la coquille par un déplacement essentiellement vertical et
   . d'autre part, dans le plan médian à l'axe de rotation de l'ensemble coquille et bac accouplés, une contre-pointe de centrage qui coopère, au moins pendant le temps de rotation, avec l'ensemble précité pour constituer, avec le bras portant l'ensemble coquille/bac, un axe horizontal de rotation stabilisée.

L'invention sera bien comprise à l'aide de la description ci-après faite à titre d'exemple non limitatif et en regard du dessin qui représente schématiquement :

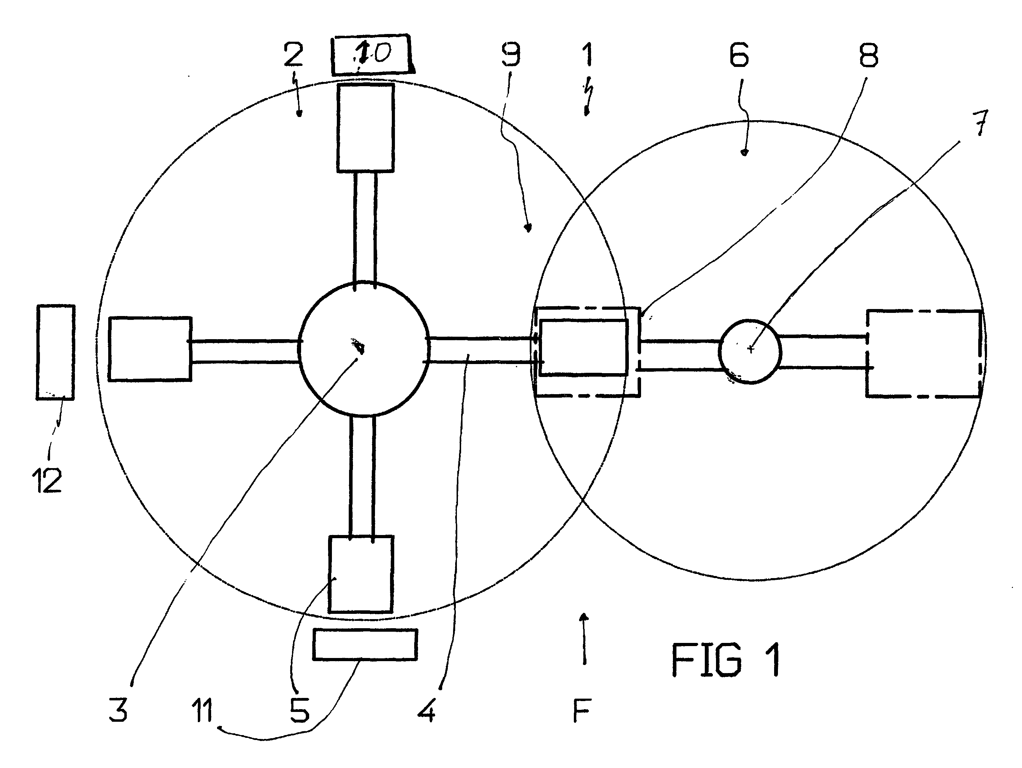

- figure 1 : une installation de moulage,

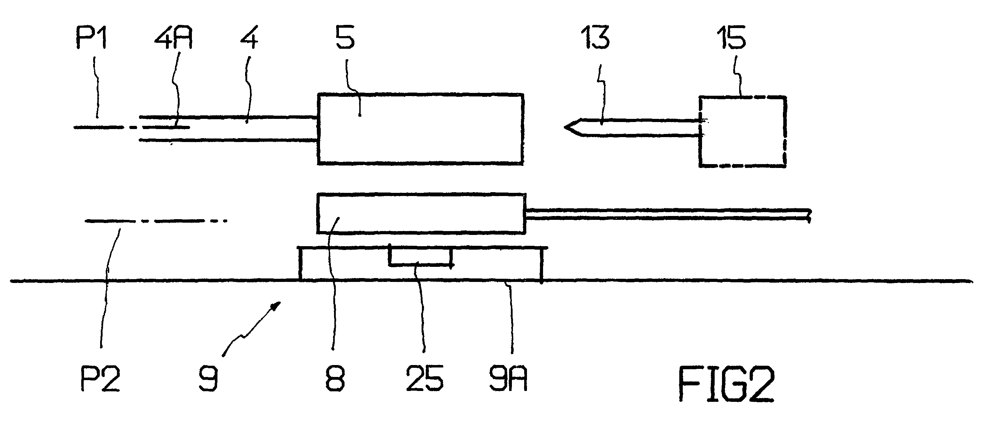

- figure 2 : une vue selon F de la figure 1,

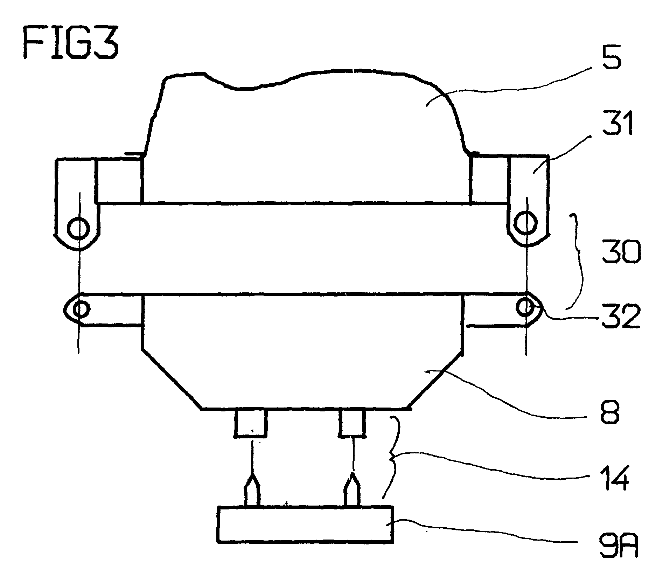

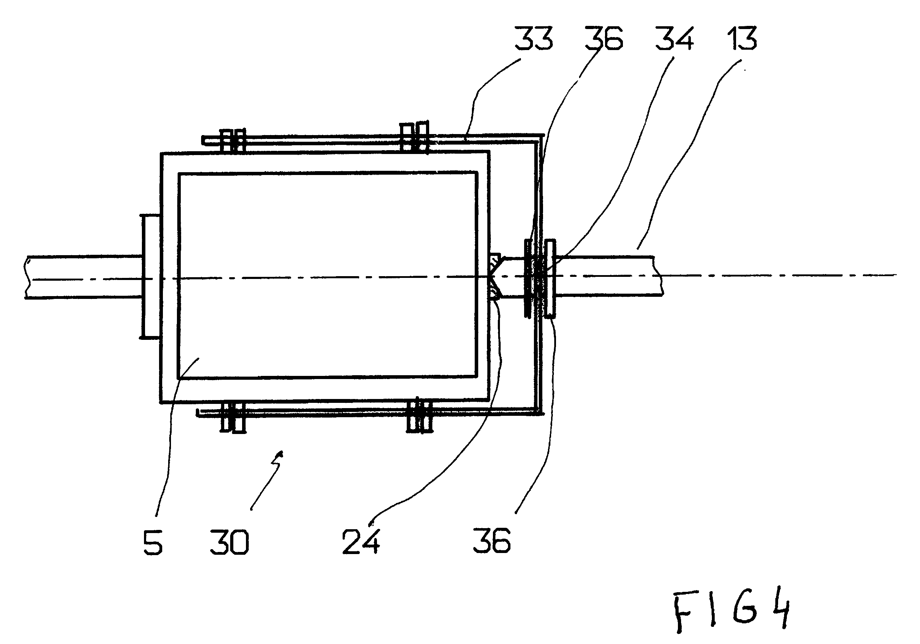

- figures 3 et 4 : des détails de réalisation.

En se reportant au dessin, on voit que, pour produire un pièce moulée notamment selon un procédé consistant à faire fondre une matière en poudre sur une coquille, on utilise une installation 1 comprenant :
- un carrousel 2 dit carrousel principal d'axe 3 de rotation vertical comprenant lui- même un nombre prédéterminé de bras 4 radiaux mobiles en rotation autour de leur axe 4A longitudinal et portant, à leur extrémité libre, une coquille 5 de moulage,
- un carrousel 6 dit carrousel secondaire d'axe 7 de rotation vertical comprenant au moins deux bacs 8 à poudre disposés radialement,
- à un poste dit de prise de poudre, un moyen 9 pour, d'une part, transférer le bac 8 à poudre depuis le carrousel secondaire vers une coquille de moulage et, d'autre part, l'accoupler à celle-ci et vice versa ,
- des moyens pour lors entraîner la coquille accouplée au bac à poudre en rotation autour d'un axe.

Cette installation comprend, outre, répartis autour du carrousel principal :
- un poste 10 de mise en température de chaque coquille,
- un poste 11 de refroidissement et
- un poste 12 de démoulage.

Bien entendu, on peut prévoir d'autres postes pour des opérations intermédiaires.

De préférence, le carrousel 2 principal comportera au moins autant de bras munis à leur extrémité d'une coquille que de postes répartis autour du carrousel.

Les bacs 8 à poudre contiennent une quantité de poudre largement supérieure à celle nécessaire pour la réalisation d'une pièce.

Seule adhère à la paroi de la coquille une couche superficielle, le reste retournant dans le bac à poudre pour les pièces suivantes.

Selon une caractéristique de l'invention :
- les coquilles 5 se déplacent en rotation dans un plan P1 situé à un niveau supérieur au plan P2 dans lequel se déplacent les bacs 8 à poudre,
- au poste de prise de poudre, les trajectoires des coquilles et des bacs se superposent, le bac à poudre se situant alors sous la coquille et
- au poste de prise de poudre, l'installation comprend :
   . d'une part, à l'aplomb de l'ensemble coquille et bac immobilisé l'un au dessus de l'autre, des moyens 9A dits de levage pour saisir le bac à poudre et le transférer vers la coquille par un déplacement essentiellement vertical et
   . d'autre part, l'installation comprend dans le plan médian à l'axe de rotation de l'ensemble coquille et bac accouplés, une contre-pointe 13 de centrage qui coopère, au moins pendant le temps de rotation, avec l'ensemble précité pour constituer avec le bras portant l'ensemble coquille/bac un axe horizontal de rotation stabilisée.

Avantageusement, le moyen de levage 9A est une table élévatrice.

Le moyen de levage et le bac comprennent des moyens 14 complémentaires de positionnement d'un élément l'un par rapport à l'autre.

Par exemple, on utilise des cônes de centrage.

Le bac est, par exemple, simplement posé sur un cadre porté par le carrousel.

De préférence, le moyen 9A de levage comprend un dispositif 25 de pesée du bac à poudre de manière à connaître, très précisément, la matière consommée à chaque prise de poudre :
- d'une part, pour un suivi des pièces et
- d'autre part, pour effectuer, après un nombre de cycles prédéterminés, un rechargement du bac à poudre correspondant effectivement à la quantité consommée.

A un poste dit de rechargement, on peut prévoir un troisième carrousel permettant d'amener la matière.

La contre-pointe est montée libre en rotation autour de son axe longitudinal.

Cette contre-pointe 13 vient en appui dans une empreinte 24 que présente au moins indirectement la coquille et un moyen 15 de déplacement de la contre-pointe selon son axe longitudinal permettant d'engager et de désengager la contre pointe de l'empreinte.

De préférence, ce moyen de déplacement engage la contre pointe avec l'empreinte avant que le moyen de levage vienne accoupler le bac sur la coquille.

Cela permet de, venir accoupler le bac sans crainte de fausser le bras portant la coquille.

Généralement, la coquille est amovible et, à cet effet, elle est portée par un cadre.

Le bac est également porté par un cadre rigide.

L'ensemble coquille et bac comprend des moyens 30 de verrouillage, l'une sur l'autre, des pièces précitées.

Ces moyens 30 de verrouillage sont des moyens de verrouillage rapide.

Par exemple, pour ce verrouillage, les moyens comprennent des pattes 31 portées par le cadre et au moins indirectement par la coquille et ces pattes présentent chacune un oeil 32 ou canon, lesquels yeux ou canon sont alignés deux à deux pour permettre le passage d'une tige 33 de verrouillage.

Ces pattes sont présentées au moins indirectement par deux cotés parallèles de la coquille et par deux cotés parallèles du bac.

L'ensemble de verrouillage comprend donc des pièces fixes et des pièces mobiles.

De préférence, les pièces mobiles sont portées soit par le bac à poudre, soit par le moyen de levage de manière à ne pas subir la chaleur du four.

Dans une forme de réalisation, c'est au moins indirectement le déplacement de la contre-pointe qui verrouille et déverrouille le bac sur la coquille.

Par exemple, les tiges de verrouillage sont associées à un doigt 34 qui vient en prise indirectement avec la contre-pointe.

Par exemple, celle-ci présente radialement deux disques 36 délimitant une gorge circulaire dans laquelle s'insère le doigt précité.

D'autres modes de réalisation sont bien entendu possibles.

Avantageusement, chaque coquille portera au moins un capteur de température pour optimiser le temps de séjour de la coquille dans le four.

## Revendications

1. Installation (1) de moulage comprenant :
- un carrousel (2) dit carrousel principal d'axe (3) de rotation vertical comprenant lui- même un nombre prédéterminé de bras (4) radiaux mobiles en rotation autour de leur axe (4A) longitudinal et portant, à leur extrémité libre, une coquille (5) de moulage,
- un carrousel (6) dit carrousel secondaire d'axe (7) de rotation vertical comprenant au moins deux bacs (8) à poudre disposés radialement, les coquilles (5) se déplacant en rotation dans un plan (P1) situé à un niveau supérieur au plan (P2) dans lequel se déplacent les bacs (8) à poudre,
- à un poste dit de prise de poudre, un moyen (9) pour, d'une part, transférer le bac (8) à poudre depuis le carrousel secondaire vers une coquille de moulage et, d'autre part, l'accoupler à celle-ci et vice versa ,
- des moyens pour alors entraîner la coquille accouplée au bac à poudre en rotation autour d'un axe,
cette installation étant **CARACTERISEE en ce que** :
- au poste de prise de poudre, les trajectoires des coquilles et des bacs se superposent, le bac à poudre se situant alors sous la coquille et
- au poste de prise de poudre, l'installation comprend :
. d'une part, à l'aplomb de l'ensemble coquille et bac immobilisé l'un au dessus de l'autre, des moyens (9A) dits de levage pour saisir le bac à poudre et le transférer vers la coquille par un déplacement essentiellement vertical et
. d'autre part, l'installation comprend dans le plan médian à l'axe de rotation de l'ensemble coquille et bac accouplés, une contre-pointe (13) de centrage qui coopère, au moins pendant le temps de rotation, avec l'ensemble précité pour constituer avec le bras portant l'ensemble coquille/bac un axe horizontal de rotation stabilisée.

2. Installation selon la revendication 1 **caractérisée en ce que** le moyen de levage (9A) est une table élévatrice.

3. Installation selon la revendication 1 ou 2 **caractérisée en ce que** le moyen de levage et le bac comprennent des moyens (14) complémentaires de positionnement d'un élément l'un par rapport à l'autre.

4. Installation selon la revendication 1 **caractérisée en ce que** le moyen (9A) de levage comprend un dispositif (25) de pesée du bac à poudre de manière à connaître, très précisément, la matière consommée à chaque prise de poudre.

5. Installation selon la revendication 1 **caractérisée en ce que** :
- la contre-pointe (13) vient en appui dans une empreinte (24) que présente au moins indirectement la coquille et
- cette installation comprend un moyen (15) de déplacement de la contre-pointe selon son axe longitudinal permettant d'engager et de désengager la contre pointe de l'empreinte, ce moyen de déplacement engageant la contre pointe avec l'empreinte avant que le moyen de levage vienne accoupler le bac sur la coquille.

6. Installation selon la revendication 1 **caractérisée en ce que** l'ensemble coquille et bac comprend des moyens de verrouillage du bac et de la coquille, lesquels moyens de verrouillage comprennent des pièces fixes et des pièces mobiles, ces pièces mobiles étant portées par le moyen de levage de manière à ne pas subir la chaleur du four.

7. Installation selon la revendication 6 **caractérisée en ce que** :
- les moyens comprennent des pattes (31) portées par le cadre et au moins indirectement par la coquille et ces pattes présentent chacune un oeil (32) ou canon, lesquels yeux ou canon sont alignés deux à deux pour permettre le passage d'une tige (33) de verrouillage et
- les tiges de verrouillage sont associées à un doigt (34) qui vient en prise indirectement avec la contre-pointe, celle-ci présentant deux disques délimitant une gorge circulaire dans laquelle s'insère le doigt précité.

8. Installation selon la revendication 1 **caractérisée en ce que** chaque coquille porte un capteur de température pour optimiser le temps de séjour de la coquille dans le four.

9. Installation selon la revendication 1 **caractérisée en ce que** la coquille est amovible et est portée par un cadre.

10. Installation selon la revendication 1 **caractérisée en ce que** le bac est porté par un cadre.

## Patentansprüche

1. Formanlage (1), welche folgendes aufweist:
- einen als Hauptförderer bezeichneten Kreisförderer (2) mit vertikaler Drehachse (3), der seinerseits eine vorgegebene Anzahl von radialen Annen (4) aufweist, die um ihre Längsachse (4A) drehbeweglich sind und an ihrem freien Ende eine Formschale (5) tragen,
- einen als Nebenförderer bezeichneten Kreisförderer (6) mit vertikaler Drehachse, welcher mindestens zwei radial angeordnete Pulverbehälter (8) aufweist, wobei sich die Formschalen (5) unter Drehung in einer Ebene (P1) verlagern, die in einer über der Höhe der Ebene (P2) liegenden Höhe liegt, wobei sich die Pulverbehälter (8) in dieser Ebene verlagern,
- eine Einrichtung (9) an einer so genannten Pulveraufnahmestation, um einerseits den Pulverbehälter (8) von dem Nebenförderer zu einer Formschale zu transportieren und andererseits diesen an der Form anzukoppeln, und umgekehrt, sowie
- eine Einrichtung, um die an den Pulverbehälter angekoppelte Form in Drehung um eine Achse anzutreiben,
**dadurch GEKENNZEICHNET, dass**
- an der Pulveraufnahmestation die Bahnen der Formschalen und der Behälter übereinander liegen, wobei nun der Pulverbehälter unter der Formschale liegt, und
- an der Pulveraufnahmestation die Anlage folgendes aufweist:
. zum einen senkrecht zu dem Verbund, der aus Formschale und festgestelltem Behälter übereinander besteht, eine so genannte Hebeeinrichtung (9A) zum Aufnehmen des Pulverbehälters und zu dessen Verlagerung zur Formschale hin durch eine im wesentlichen vertikal verlaufende Verschiebung, und
. zum anderen, dass die Anlage in der Mittelebene der Drehachse des aus Formschale und damit gekoppeltem Behälter bestehenden Verbundes eine Zentrierreitstockspitze (13) aufweist, welche zumindest während der Zeit der Drehbewegung mit dem vorgenannten Verbund zusammenwirkt, um mit dem Arm, welcher den Verbund aus Formschale und Behälter trägt, eine stabilisierte horizontale Drehachse zu bilden.

2. Anlage nach Anspruch 1, **dadurch gekennzeichnet, dass** die Hebeeinrichtung (9A) ein Hebetisch ist.

3. Anlage nach Anspruch 1 oder 2, **dadurch gekennzeichnet, dass** die Hebeeinrichtung und der Behälter komplementäre Mittel zur Positionierung eines Teils bezüglich des jeweils anderen Teils aufweisen.

4. Anlage nach Anspruch 1, **dadurch gekennzeichnet, dass** die Hebeeinrichtung (9A) eine Wiegevorrichtung (25) zum Wiegen des Pulverbehälters in der Weise aufweist, dass die bei jeder Pulveraufnahme verbrauchte Stoffmenge mit hoher Genauigkeit bekannt ist.

5. Anlage nach Anspruch 1, **dadurch gekennzeichnet, dass**
- die Reitstockspitze (13) in einer Vertiefung (24), welche zumindest indirekt in der Formschale vorgesehen ist, in Anlage kommt, und
- diese Anlage eine Einrichtung (15) zum Verlagern der Reitstockspitze entlang ihrer Längsachse aufweist, welche es ermöglicht, die Reitstockspitze in Eingriff mit der Vertiefung und außer Eingriff mit dieser zu bringen, wobei diese Verlagerungseinrichtung die Reitstockspitze in Eingriff mit der Vertiefung bringt, ehe die Hebeeinrichtung den Behälter auf der Formschale anzukoppeln beginnt.

6. Anlage nach Anspruch 1, **dadurch gekennzeichnet, dass** der aus Formschale und Behälter bestehende Verbund Einrichtungen zum Verriegeln des Behälters und der Formschale aufweist, wobei die Verriegelungseinrichtung feststehende und bewegliche Teile umfasst, wobei diese beweglichen Teile von der Hebeeinrichtung in der Weise getragen werden, dass sie nicht der Ofenwärme ausgesetzt werden.

7. Anlage nach Anspruch 6, **dadurch gekennzeichnet, dass**:
- die Einrichtung Laschen (31) aufweist, welche von dem Rahmen und zumindest indirekt von der Formschale getragen werden und jeweils eine Öse (32) oder ein Rohr umfassen, wobei die Ösen bzw. das Rohr jeweils paarweise so ausgerichtet sind, dass der Durchtritt einer Verriegelungsstange (33) möglich ist, und
- die Verriegelungsstangen mit einem Finger (34) verbunden sind, welcher indirekt in Eingriff mit der Reitstockspitze kommt, wobei diese zwei Scheiben aufweist, in denen eine kreisförmige Auskehlung ausgebildet ist, in welche der genannte Finger eingeführt wird.

8. Anlage nach Anspruch 1, **dadurch gekennzeichnet, dass** jede Formschale einen Temperaturführer trägt, um die Verweildauer der Formschale im Ofen zu optimieren.

9. Anlage nach Anspruch 1, **dadurch gekennzeichnet, dass** die Formschale abnehmbar ist und von einem Rahmen getragen wird.

10. Anlage nach Anspruch 1, **dadurch gekennzeichnet, dass** der Behälter von einem Rahmen getragen wird.

## Claims

1. A powder-moulding installation (1), comprising:
- a carousel (2) called a principal carousel with a vertical axis of rotation (3), itself comprising a predetermined number of radial arms (4) movable in rotation about their longitudinal axis (4A) and bearing, at their extreme end, a mould part (5),
- a carousel (6) called a secondary carousel with a vertical axis of rotation (7), comprising at least two radially arranged tubs (8) of powder, the mould parts (5) rotating in a plane (P1) situated at a higher level than the plane (P2) in which the powder tubs (8) move,
- at a station called a powder take-up station, a means (9) for on the one hand transferring the powder tub (8) from the secondary carousel towards a mould part, and on the other hand for coupling it thereto and vice versa,
- means for then inducing the mould part coupled to the powder tub to rotate about an axis,
this installation being **characterised in that**:
- at the powder take-up station, the paths of the mould parts and of the tubs are superimposed, the powder tub then being situated beneath the mould part, and
- at the powder take-up station, the installation comprises:
• on the one hand, aligned with the assembly of superimposed mould part and immobilised tub, means (9A) called lifting means for gripping the powder tub and transferring it towards the mould part by a substantially vertical displacement, and
• on the other hand the installation comprises, in the median plane to the axis of rotation of the coupled mould part and tub assembly, a centring support point (13) which cooperates, at least during rotation, with the above-mentioned assembly so as to constitute, with the arm bearing the mould part/tub assembly, a horizontal axis of stabilised rotation.

2. An installation according to Claim 1, **characterised in that** the lifting means (9A) is an elevating platform.

3. An installation according to Claim 1 or 2, **characterised in that** the lifting means and the tub comprise complementary means (14) for positioning one relative to the other.

4. An installation according to Claim 1 or 2, **characterised in that** the lifting means (9A) comprises a device (25) for weighing the powder tub so as to ascertain, very precisely, the material consumed each time powder is taken up.

5. An installation according to Claim 1, **characterised in that**:
- the centring support point (13) comes to rest in a recess (24) at least indirectly presented by the mould part, and
- this installation comprises a means (15) for displacing the centring support point along its longitudinal axis, enabling the centring support point to engage with and disengage from the recess, this displacement means engaging the centring support point with the recess before the lifting means couples the tub to the mould part.

6. An installation according to Claim 1, **characterised in that** the mould part / tub assembly comprises means of locking the tub and the mould part, the locking means comprising fixed pieces and movable pieces, these movable pieces being borne by the lifting means in such a way that they are not subject to the heat of the oven.

7. An installation according to Claim 6, **characterised in that**:
- the means comprise lugs (31) borne by the frame and at least indirectly by the mould part, and these lugs each have an eye (32) or a bush, the said eyes or bushes are aligned two by two to permit the passage of a locking pin (33), and
- the locking pins are associated with a finger (34) which engages indirectly with the centring support point, the latter having two discs delimiting a circular groove into which the above-mentioned finger is inserted.

8. An installation according to Claim 1, **characterised in that** each mould part has a temperature sensor to optimise the residence time of the mould part in the oven.

9. An installation according to Claim 1, **characterised in that** the mould part is removable and is borne by a frame.

10. An installation according to Claim 1, **characterised in that** the tub is borne by a frame.
